# EUROPEAN PATENT APPLICATION

(11) **EP 4 529 060 A1**
(43) Date of publication of application: **26.03.2025**
(21) Application number: 23854243.5
(22) Date of filing: 02.08.2023
(51) Int. Cl.: H04L 1/06

(54) **CHANNEL STATE INFORMATION PROCESSING METHODS AND APPARATUS, COMMUNICATION NODE AND STORAGE MEDIUM**

(30) Priority: 19.08.2022 CN 202210999347
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); LIU, Wenfeng, Shenzhen, Guangdong 518057 (CN); LI, Lun, Shenzhen, Guangdong 518057 (CN)
(74) Representative: Aipex B.V.
(86) International application number: PCT/CN2023/110685
(87) International publication number: WO 2024/037339

(57) **Abstract**

Provided are a channel state information processing method and apparatus, a communication node and a storage medium. The channel state information processing method includes receiving N sets of reference signal configuration information and K sets of reference signals; acquiring K pieces of channel information based on the K sets of reference signals; determining M pieces of channel state information based on the K pieces of channel information, where K, N, and M are each a positive integer, K is less than N, and M is greater than or equal to 1.

## Description

### TECHNICAL FIELD

The present application relates to the field of communication technology, for example, a channel state information processing method and apparatus, a communication node and a storage medium.

### BACKGROUND

Multi-antenna technology can enhance the performance of wireless communication systems and is therefore widely used in various wireless communication systems. To achieve the performance of multi-antenna technology, the network side needs to acquire relatively accurate channel state information (CSI). In the related art, CSI can be efficiently fed back through artificial intelligence (AI). For example, based on N pieces of channel information prior to a reference slot, M pieces of channel state information after the reference slot is acquired by AI. However, in certain scenarios, the terminal side may not effectively acquire N pieces of channel information prior to the reference slot and only acquires K pieces of channel information, where K is less than N.

### SUMMARY

Embodiments of the present application provide a channel state information processing method and apparatus, a communication node and a storage medium.

In a first aspect, an embodiment of the present application provides a channel state information processing method. The channel state information processing method is applied to a first communication node and includes the following:

N sets of reference signal configuration information and K sets of reference signals are received. K pieces of channel information are acquired based on the K sets of reference signals. M pieces of channel state information are determined based on the K pieces of channel information. K, N, and M are each a positive integer, K is less than N, and M is greater than or equal to 1.

In a second aspect, an embodiment of the present application provides a channel state information processing method. The channel state information processing method is applied to a second communication node and includes the following:
N sets of reference signal configuration information are sent, and K sets of reference signals are sent. The K sets of reference signals are used by a first communication node to acquire K pieces of channel information and determine M pieces of channel state information based on the K pieces of channel information. K, N, and M are each a positive integer, K is less than N, and M is greater than or equal to 1.

In a third aspect, an embodiment of the present application provides a channel state information processing apparatus. The channel state information processing apparatus is integrated into a first communication node and includes a receiving module, an acquisition module, and a determination module.

The receiving module is configured to receive N sets of reference signal configuration information and K sets of reference signals. The acquisition module is configured to acquire K pieces of channel information based on the K sets of reference signals K. The determination module is configured to determine M pieces of channel state information based on the K pieces of channel information. K, N, and M are each a positive integer, K is less than N, and M is greater than or equal to 1.

In a fourth aspect, an embodiment of the present application provides a channel state information processing apparatus. The channel state information processing apparatus is integrated into a second communication node and includes a transmission module.

The transmission module is configured to send N sets of reference signal configuration information. The transmission module is also configured to send K sets of reference signals. The K sets of reference signals are used by a first communication node to acquire K pieces of channel information and determine M pieces of channel state information based on the K pieces of channel information. K, N, and M are each a positive integer, K is less than N, and M is greater than or equal to 1.

In a fifth aspect, an embodiment of the present application provides a communication node. The communication node includes a memory and a processor. The memory stores a computer program. The processor, when executing the computer program, is configured to implement the channel state information processing methods described in the first aspect and the second aspect of the embodiments of the present application.

In a sixth aspect, an embodiment of the present application provides a storage medium. The storage medium stores a computer program that, when executed by a processor, causes the processor to implement the channel state information processing methods described in the first aspect and the second aspect of the embodiments of the present application.

### BRIEF DESCRIPTION OF DRAWINGS

FIG. 1 is a diagram illustrating the structure of a wireless communication system according to an embodiment of the present application.
FIG. 2 is a schematic diagram of a channel state information processing procedure according to an embodiment of the present application.
FIG. 3 is a flowchart of a channel state information processing method according to an embodiment of the present application.
FIG. 4 is another flowchart of the channel state information processing method according to an embodiment of the present application.
FIG. 5 is a diagram illustrating the structure of a channel state information processing apparatus according to an embodiment of the present application.
FIG. 6 is a diagram illustrating another structure of the channel state information processing apparatus according to an embodiment of the present application.
FIG. 7 is a diagram illustrating the structure of a communication node according to an embodiment of the present application.

### DETAILED DESCRIPTION

The embodiments described herein are only intended to explain the present application. Embodiments of the present application are described below in conjunction with drawings.

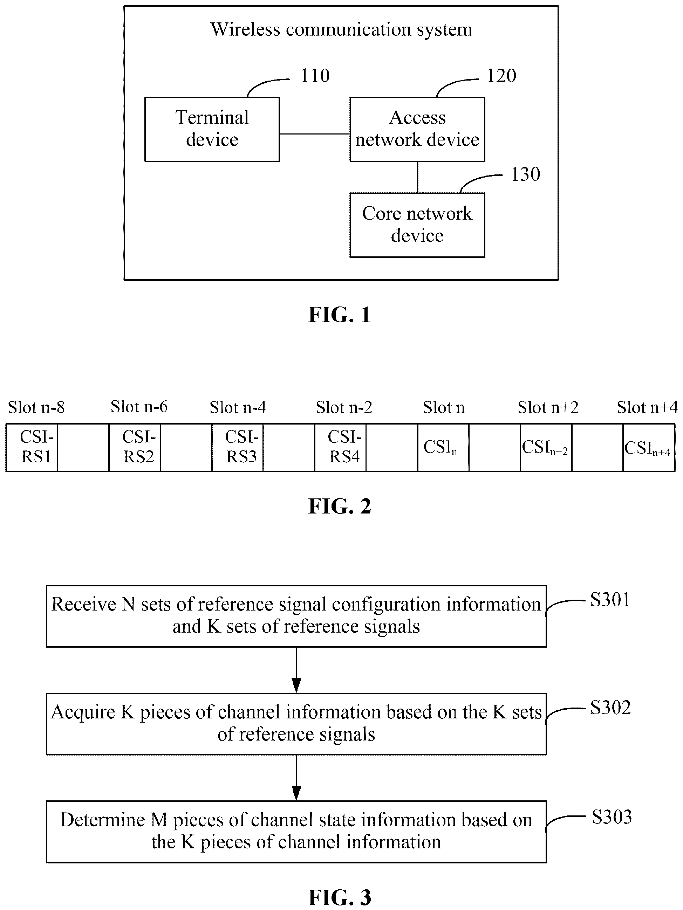

The channel state information processing methods provided in the embodiments of the present application may be applied to various types of wireless communication systems, such as a Long-Term Evolution (LTE) system, a 4th-generation mobile communication technology (4G) system, a 5th-generation mobile communication technology (5G) system, an LTE and 5G hybrid architecture system, a 5G New Radio (NR) system, and new communication systems emerging in future communication development, for example, a 6th-generation mobile communication technology (6G) system. FIG. 1 is a diagram illustrating the networking of a wireless communication system according to an embodiment. As shown in FIG. 1, the wireless communication system includes a terminal device 110, an access network device 120, and a core network device 130.

The terminal device 110 may be a device having radio transceiving functions. The device may be deployed on land (such as being indoor or outdoor, handled, wearable, or vehicle-mounted); may be deployed on water (such as in ships); and may also be deployed in the air (such as in airplanes, balloons, and satellites). Some examples of the terminal device 110 are as follows: user equipment (UE), a mobile phone, a mobile station, a tablet computer, a notebook computer, an ultra-mobile personal computer (UMPC), a handheld computer, a netbook, a personal digital assistant (PDA), and other user equipment that can be networked; a virtual reality (VR) terminal, an augmented reality (AR) terminal, a wireless terminal in industrial control, a wireless terminal in self-driving, a wireless terminal in remote medical, a wireless terminal in a smart grid, a wireless terminal in transportation safety, a wireless terminal in a smart city, and a wireless terminal in a smart home; an Internet of Things (IoT) node in the IoT; an in-vehicle communication apparatus in the Internet of Vehicles; an entertainment and game device or system; or a global positioning system device. The embodiments of the present application do not limit the form of the terminal device. In addition, the terminal device 110 may be referred to as a terminal.

The access network device 120 is an access device through which the terminal device 110 accesses the wireless communication system in a wireless manner and may be a base station, an evolved base station (evolved NodeB, eNB, or eNodeB) in LTE-Advanced (LTE-A), a transmission reception point (TRP), a base station or gNodeB (gNB) in the 5G mobile communication system, a base station in a future mobile communication system, an access node in a Wireless Fidelity (Wi-Fi) system, or the like. The base station may include various network side devices such as a macro base station, a micro base station, a Home Node B, a radio remote, a router, network side devices and location management function (LMF) devices such as a Wi-Fi device, or a primary cell and a secondary cell. The access network device 120 may also be a module or unit that performs part of functions of the base station, for example, a central unit (CU) or a distributed unit (DU). The embodiments of the present application do not limit the technology and the device configuration used by the access network device. Additionally, the access network device may be referred to as a base station.

The core network device 130 may include an access and mobility management network element and a session management network element. Exemplarily, the terminal device 110 may access the core network through the access network device 120, thereby enabling data transmission.

To facilitate the understanding of those skilled in the art, the relevant concepts involved in the communication system are first introduced below.

In the embodiments of the present application, to calculate channel state information or perform operations such as channel estimation, mobility management, and positioning, the second communication node (such as a base station) or the first communication node (such as a terminal) needs to send a reference signal (RS). The reference signal includes but is not limited to a channel state information reference signal (CSI-RS), including a zero power CSI-RS (ZP CSI-RS) and a non-zero power CSI-RS (NZP CSI-RS), a channel state information-interference measurement signal (CSI-IM), a sounding reference signal (SRS), a synchronization signal block (SSB), a physical broadcast channel (PBCH), and a synchronization signal block/physical broadcast channel (SSB/PBCH). The NZP CSI-RS may be used to measure channels or interference. The CSI-RS may also be used for tracking and is thus referred to as a CSI-RS for Tracking (TRS). The CSI-IM is generally used to measure interference. The SRS is used to perform channel estimation or acquire uplink precoding. In addition, a resource element (RE) set used to transmit the reference signal is referred to as a reference signal resource, such as a CSI-RS resource, an SRS resource, a CSI-IM resource, and an SSB resource. In the embodiments of the present application, the SSB may include a synchronization signal block and/or a physical broadcast channel.

In the embodiments of the present application, a resource for transmitting the reference signal may also be referred to as a reference signal resource. To save signaling overhead, multiple reference signal resources may be combined into a set (such as a CSI-RS resource set, a CSI-IM resource set, and an SRS resource set). A reference signal resource set includes at least one reference signal resource. Multiple reference signal resource sets may have the same reference signal resource setting (such as CSI-RS resource setting, SRS resource setting, and CSI-IM resource setting, where the CSI-RS resource setting and the CSI-IM resource setting may be combined together and both referred to as the CSI-RS resource setting). The parameter information of the reference signal is configured through the reference signal resource setting.

In the embodiments of the present application, the second communication node configures measurement resource information, and the measurement resource information is used for acquiring channel state information. The measurement resource information includes C_{N} pieces of channel measurement resource (CMR) information and C_{M} pieces of interference measurement resource (IMR) information, where C_{N} and C_{M} are positive integers. The second communication node configures the measurement resource information in one report configuration (report config) or reporting setting. C_{N} pieces of CMR information are used for the terminal to perform the channel measurement, and C_{M} pieces of IMR information are used for the terminal to perform measurement on the interference received.

In the embodiments of the present application, two antenna ports are referred to as being quasi co-located (QCL), indicating that if the channel properties of a symbol transmitted on one antenna port can be inferred from the channel properties of a symbol transmitted on the other antenna port, these two antenna ports are considered to be quasi co-located. Typically, two QCL ports originate from the same base station or node. The channel properties mentioned here include, but are not limited to, the average gain, delay spread, Doppler spread, Doppler shift, average delay parameters, and spatial UE--Rx parameters. The antenna ports include, but are not limited to, demodulation reference signal (DMRS) pilot ports or indexes, SRS ports or indexes, and SS block ports or indexes. A QCL relationship includes one of CSI-RS resource configuration information or synchronization signal block index, where the synchronization signal block index includes a primary synchronization signal block index and a secondary synchronization signal block index. Reference signal resource configuration information of the channel state information includes at least one of the following: a start symbol index of a CSI-RS, an end symbol index of a CSI-RS, a pattern of a CSI-RS, density of a CSI-RS, a cyclic shift sequence for pilots of a CSI-RS, orthogonal cover code (OCC) of a CSI-RS, and other information.

QCL types may include QCL Type A, QCL Type B, QCL Type C, and QCL Type D. Two ports satisfying the QCL relationship represent that large-scale information of one port may be derived from large-scale information of the other port. The large-scale information includes but is not limited to Doppler shift, Doppler spread, average delay, delay spread, and spatial Rx parameters. One classification of QCL types is as follows:
- 'QCL-Type A': {Doppler shift, Doppler spread, average delay, delay spread}
- 'QCL-Type B': {Doppler shift, Doppler spread}
- 'QCL-Type C': {Doppler shift, average delay}
- 'QCL-Type D': {Spatial Rx parameter}

To improve data or signal transmission, the second communication node needs to acquire channel state information. As shown in FIG. 2, a method for acquiring channel state information is provided. For example, the channel state information of the reference slot n and M slots after the reference slot n (such as slot n, slot n + 2, and slot n + 4) is predicted based on the channel information from N slots (such as slot n - 8, slot n - 6, slot n - 4, and slot n - 2) prior to the reference slot n. However, in some scenarios, the second communication node may only transmit K sets of reference signals among N sets of reference signals due to resource conflicts or other reasons. Consequently, the terminal may not effectively acquire N pieces of channel information prior to the reference slot n and instead only acquires K pieces of channel information. This scenario leads to the failure of the original feedback of M pieces of channel state information determined based on the N pieces of channel information. Therefore, the technical solution provided by the embodiments of the present application aims to solve the problem of acquiring channel state information when the number of received reference signal sets is less than the expected number of reference signal sets.

FIG. 3 is a flowchart of a channel state information processing method according to an embodiment of the present application. The method is applied to a first communication node. In this embodiment, the first communication node may be a terminal, and the second communication node may be a base station. As shown in FIG. 3, the method may include S301 to S303.

In S301, N sets of reference signal configuration information and K sets of reference signals are received.

The second communication node transmits N sets of reference signal configuration information. Due to conflicts between reference signal resources configured for the second communication node or other reasons, the second communication node transmits only K sets of reference signals, where K and N are positive integers, and K is less than N. Therefore, the first communication node may only receive corresponding K sets of reference signals based on the received N sets of reference signal configuration information. The N sets of reference signal configuration information correspond to N sets of reference signals, and the K sets of reference signals may be part of the N sets of reference signals. For example, the K sets of reference signals may be the first K sets of reference signals, the last K sets of reference signals, the middle continuous K sets of reference signals, or any non-continuous K sets of reference signals among the N sets of reference signals.

In an embodiment, the reference signal configuration information includes a resource type (resourceType), and the resource type defines the time domain transmission characteristics of the reference signal. Optionally, the resource type may include one of the following: a periodic reference signal, an aperiodic reference signal, and a semi-persistent reference signal.

In an embodiment, the N sets of reference signal configuration information may include K1 periodic reference signals, K2 aperiodic reference signals, and K3 semi-persistent reference signals, where K1, K2, and K3 are non-negative integers, and K1 + K2 + K3 = N. In an embodiment, the resource types included in the N sets of reference signal configuration information may be the same, that is, two of K1, K2, and K3 have the value of zero. For example, the N sets of reference signal configuration information may be all periodic reference signals, all aperiodic reference signals, or all semi-persistent reference signals. In an embodiment, the N sets of reference signal configuration information at least include two resource types of reference signals. For example, at least two of K1, K2, and K3 have a value greater than zero. Exemplarily, the second communication node needs to configure and transmit four sets of reference signals, where the four sets of reference signals may be any of periodic, semi-persistent, and aperiodic. For example, in one configuration, two sets of periodic reference signals, one set of aperiodic reference signals, and one set of semi-persistent reference signals are provided; in another configuration, three sets of semi-persistent reference signals and one set of aperiodic reference signals are provided; in another configuration, two sets of periodic reference signals and two sets of aperiodic reference signals are provided; in another configuration, two sets of semi-persistent reference signals and two sets of periodic reference signals are provided; or the like.

In an embodiment, the N sets of reference signal configuration information have the same quasi-co-location parameter.

In an embodiment, a set of reference signals may include one of the following: a reference signal resource, a group of reference signal resources, a reference signal resource set, and a reference signal resource corresponding to a reference signal resource configuration.

Exemplarily, one set of reference signals may be one reference signal resource, such as a channel state information reference signal (CSI-RS) resource, a sounding reference signal (SRS) resource, or a synchronization signal block (SSB) resource. In an embodiment, one set of reference signals may be one group of reference signal resources, such as a group of CSI-RS resources, a group of SRS resources, or a group of SSB resources. In an embodiment, one set of reference signals may be one reference signal resource set, such as a CSI-RS resource set, an SRS resource set, or an SSB resource set. In an embodiment, one set of reference signals may be a reference signal resource corresponding to one reference signal resource configuration, such as a CSI-RS resource config/setting, an SRS resource config/setting, or an SSB resource config/setting.

Exemplarily, the reference signal in a set of reference signals may also be a reference signal of other concepts except the CSI-RS, SSB, and SRS, and may have different names in different systems. That is, the reference signal in the embodiments of the present application may also be another reference signal used to acquire channel state information, channel information, mobility management, and positioning management. Optionally, the reference signal is also referred to as a pilot. In an embodiment, one set of reference signals may include a set of reference signals for channel measurement and a set of reference signals for interference measurement.

In S302, K pieces of channel information are acquired based on the K sets of reference signals.

Channel information is acquired based on a reference signal (such as a CSI-RS) and used for describing the channel environment between the first communication node and the second communication node, such as a time domain channel matrix and a frequency domain channel matrix. In an embodiment, the channel information is a complex matrix related to the number of transmitting antennas Nt, the number of receiving antennas Nr, and resource elements (REs). For example, at least one Nr*Nt channel matrix is present in a physical resource block.

The second communication node sends reference signals for channel measurement over K slots. The first communication node receives the reference signals for channel measurement sent over K slots and acquires the channel information of the corresponding slots based on the received reference signals in the K slots, thereby obtaining K pieces of channel information. In an embodiment, the K sets of reference signals are transmitted over no more than K slots. For example, some slots transmit more than one set of reference signals on different frequency domain resources.

Optionally, K pieces of channel information may be channel information prior to a reference slot. In an embodiment, the reference slot may include at least one of the following: a slot agreed between the first communication node and the second communication node, the current slot, a slot indicated by the second communication node, a slot obtained by adding a fixed offset to a slot indicated by the second communication node, and a slot obtained by adding a fixed offset to a slot indicated by the signaling received by the first communication node from the second communication node.

In S303, M pieces of channel state information are determined based on the K pieces of channel information.

M is a positive integer, and M is greater than or equal to 1. In an embodiment, the M pieces of channel state information are the channel state information of a reference slot and a slot after the reference slot.

The channel state information may include at least one of the following: a CSI-RS resource indicator (CRI), a synchronization signal block resource indicator (SSBRI), reference signal received power (RSRP), differential RSRP, a channel quality indicator (CQI), a precoding matrix indicator (PMI), a layer indicator (LI), a rank indicator (RI), a level 1 signal-to-interference-plus-noise ratio (L1-SINR), a differential L1-SINR, and precoding information. Here, the precoding matrix indicator is a type of precoding information, that is, in cases where the precoding information is implemented based on a codebook. The precoding information also includes methods implemented without a codebook, such as second-type precoding information. In an example, the CSI including only the first-type precoding information is referred to as first-type CSI. In an example, the CSI including the second-type precoding information is referred to as second-type CSI.

In an embodiment, the first communication node and the second communication node may transmit channel state information matching with the channel through the first-type precoding information. The first-type precoding information is formed based on traditional channel characteristic matrices or the quantized values of characteristic matrices. Codebook-based methods are used as an example. The codebook may be, for example, the codebook for N antennas in the LTE, where N may be 2, 4, 8, 12, 16, 24, 32; or the type I codebook, type II codebook, type II port selection codebook, enhanced type II codebook, enhanced type II selection codebook, and further enhanced type II selection codebook in NR. The codebook here includes L codewords, and the main idea is that the first communication node and the second communication node save L codewords in advance according to a prescribed formula, table, or dictionary. In an example, a codeword is a vector. In an example, a codeword is a matrix, the matrix includes r columns, and each column is also a vector. Each column of the matrix is mutually orthogonal. In an example, the vector constituting the codeword is a 0-1 vector, where only one value in the entire vector is 1, and all other values are zero. In an example, the vector constituting the codeword is a discrete Fourier transform (DFT) vector. In an example, the vector constituting the codeword is acquired by a Kronecker product of two or more DFT vectors. In an example, the vector constituting the codeword is obtained by multiplying two or more DFT vectors by different phase rotations and then connecting the two or more DFT vectors. In an example, the vector constituting the codeword is acquired by taking the Kronecker product of two or more DFT vectors and multiplying by phase rotations. The first communication node or the second communication node, by searching L codewords, finds the codeword that best matches the channel as the optimal codeword to transmit data or signals. The codeword matching the channel here includes but is not limited to at least one of the following: The distance between the codeword and the channel is the smallest, the correlation between the codeword and the channel is the largest, the distance between the codeword and the optimal right singular vector or matrix of the channel is the smallest, the correlation between the codeword and the optimal right singular vector or matrix of the channel is the largest, and the codeword yields the maximum signal-to-noise ratio when calculated with the channel. L is an integer greater than 1, generally greater than the number of transmitting antennas.

In an embodiment, the first communication node and the second communication node may also transmit the channel state information matching with the channel through the second-type precoding information. The second-type precoding information is used to acquire the channel state information based on AI. In an example, the first communication node and the second communication node acquire the channel state information through the encoder of an autoencoder. The autoencoder includes the encoder and a decoder. The encoder is deployed at the first communication node (such as a terminal), and the decoder is deployed at the second communication node (such as a base station). The first communication node compresses the acquired channel H through the encoder to obtain the compressed H1, and quantizes and feeds back the compressed channel H1 to the second communication node. The second communication node receives the quantized H1, and de-quantizes and inputs H1 into the decoder. The decoder decompresses H1, thereby restoring H. In an example, H includes K0 elements; the first communication node selects K elements from H as H1, quantizes H1, and feeds back the quantized H1; the second communication node receives and de-quantizes the K quantized elements and inputs the de-quantized K elements into the AI module; the AI module outputs K0 elements as the recovery of H and thereby obtain the precoding matrix for H. K and K0 are integers greater than 1, and K is less than K0. Here, H1 obtained through the compressor or the K elements selected from H may both be referred to as the second-type precoding information. Moreover, for simplicity, the quantized H1 may also be referred to as the second-type precoding information. In an example, the second-type precoding information may also be a precoding matrix different from the first-type precoding information and generated by other non-AI methods. In an example, the second-type precoding information may also be a precoding matrix other than the first-type precoding information.

After obtaining K pieces of channel information, the first communication node may determine M pieces of channel information based on the K pieces of channel information and quantize the M pieces of channel information to obtain M pieces of channel state information. Exemplarily, the K pieces of channel information may be processed by AI to obtain M pieces of channel information. For example, the K pieces of channel information are encoded in sequence and input into a first AI network, and the M pieces of channel information are determined by the first AI network. The K pieces of channel information may be filtered or averaged to obtain M pieces of channel information by linear mapping. The K pieces of channel information may also be processed into M pieces of channel information by nonlinear mapping. In an embodiment, the M pieces of channel information may be encoded and input into a corresponding second AI network, and the M pieces of channel state information corresponding to the M pieces of channel information may be output by the second AI network. In an embodiment, the M pieces of channel state information may also be directly acquired according to the K pieces of channel information.

In an embodiment, determining the M pieces of channel state information based on the K pieces of channel information includes determining a piece of channel state information based on at least one piece of channel information among the K pieces of channel information, where the piece of channel state information is first-type precoding information.

In an embodiment, the piece of channel state information may be determined based on channel information corresponding to a reference signal with the largest transmission slot among the K sets of reference signals.

In an embodiment, the first communication node does not expect to receive fewer than N sets of reference signals.

In an embodiment, determining the M pieces of channel state information based on the K pieces of channel information includes, in a case where K is less than or equal to a first threshold X, determining a piece of channel state information based on at least one piece of channel information among the K pieces of channel information, where the piece of channel state information is first-type precoding information, and X is an integer greater than 1 and less than N.

In an embodiment, determining the M pieces of channel state information based on the K pieces of channel information includes that, in a case where K is less than or equal to a second threshold Y, the first communication node determines no channel state information or determines the channel state information as an empty set, where Y is an integer greater than 1 and less than N.

In an embodiment, determining the M pieces of channel state information based on the K pieces of channel information includes acquiring N pieces of channel information based on the K pieces of channel information; and determining M1 pieces of channel state information based on the N pieces of channel information in a first acquisition manner, where M1 is less than or equal to M. Here, it can be understood that M1 pieces of channel state information and M - M1 empty sets are provided, or in this case, M is M1.

In an embodiment, the N pieces of channel information are acquired by performing zero padding on the K pieces of channel information.

In an embodiment, in the case where K is greater than the first threshold X, N pieces of channel information are acquired based on the K pieces of channel information, and M1 pieces of channel state information are determined based on the N pieces of channel information.

In an embodiment, determining the M pieces of channel state information based on the K pieces of channel information includes determining M2 pieces of channel state information based on the K pieces of channel information in a second acquisition manner, where M2 is a positive integer less than or equal to M. Here, it can be understood that M2 pieces of channel state information and M - M2 empty sets are further provided, or in this case, M is M2.

In an embodiment, in the case where K is greater than a third threshold Z, M2 pieces of channel state information are determined based on the K pieces of channel information in the second acquisition manner, where Z is an integer greater than 1 and less than N.

In an embodiment, the terms first and second of the first acquisition manner and the second acquisition manner are only used to distinguish the manners of acquiring channel state information. For example, the first acquisition manner is a channel state information acquisition manner that takes N pieces of channel information as input. The second acquisition manner is a channel state information acquisition manner that takes K pieces of channel information as input. For example, the first acquisition manner is a channel information-based channel state information acquisition manner originally determined by the first communication node or the second communication node, and the second acquisition method is a channel information-based channel state information acquisition manner newly determined by the first communication node or the second communication node.

In an embodiment, at least one of the first threshold, the second threshold, and the third threshold is referred to as the threshold, the threshold is determined based on the second communication node and is indicated to the first communication node through higher-layer signaling or physical layer signaling, and the first communication node determines the threshold by receiving the higher-layer signaling or physical layer signaling. In an embodiment, the threshold is determined based on the method agreed upon by the first communication node and the second communication node. In an embodiment, the threshold is determined by the second communication node based on the capabilities of the second communication node itself.

In an embodiment, the obtained channel state information and/or the slot corresponding to the obtained channel state information may be fed back to the second communication node.

The slot may be a slot or a mini slot. A slot or a mini slot consists of at least one symbol. The symbol here refers to a time unit in a sub-frame, a frame, or a slot. For example, the symbol may be an orthogonal frequency-division multiplexing (OFDM) symbol, a single-carrier frequency-division multiple access (SC-FDMA) symbol, or an orthogonal frequency-division multiple access (OFDMA) symbol.

For transmitting the channel state information, the first communication node and the second communication node need to define a CSI report (CSI report or CSI report congfig). The CSI report defines at least one of the following parameters: a time-frequency resource for CSI feedback, report quantity (reportQuantity) included in the CSI, a time domain type (reportConfigType) of CSI feedback, a channel measurement resource, an interference measurement resource, the size of the measurement bandwidth, and other information. The CSI report may be transmitted on an uplink transmission resource. The uplink transmission resource may include a physical uplink shared channel (PUSCH) and a physical uplink control channel (PUCCH). Moreover, the CSI report also includes time domain characteristics, including a periodic CSI report (P-CSI), an aperiodic CSI report (AP-CSI), and a semi-persistent CSI report (SP-CSI). Generally, the number of bits transmitted by the P-CSI is relatively small and the bits may be transmitted on the PUCCH while the number of bits transmitted by the A-CSI is larger and the bits are generally transmitted on the PUSCH. The SP-CSI may be transmitted based on the PUSCH or PUCCH. The P-CSI transmitted based on the PUCCH is generally configured by higher-layer signaling (radio resource control (RRC)). The SP-CSI transmitted based on the PUCCH is also configured or activated by higher-layer signaling (the RRC and/or media access control control element (MAC CE)). The SP-CSI or A-CSI transmitted based on the PUSCH is triggered by physical layer signaling (downlink control information (DCI)). The DCI is generally transmitted on a physical downlink control channel (PDCCH). That is, optionally, the preceding channel state information and the slot corresponding to the channel state information may be transmitted in an uplink transmission resource. In an example, the preceding channel state information may be carried on at least one aperiodic PUSCH for transmission. In an example, the preceding channel state information may be carried on at least one semi-persistent PUSCH for transmission. In an example, the preceding channel state information may be carried on at least one periodic PUCCH for transmission.

In an embodiment, the second communication node configures M CSI reports that need to be fed back to the first communication node through higher-layer signaling and/or physical layer signaling. Each CSI report has an identity (ID) that is referred to as the CSI reportID. The first communication node may select M_{C} CSI reports from the M CSI reports based on the computing power or processing power of the first communication node and the requirements of the second communication node. The first communication node feeds back at least one CSI report of the M_{C} CSI reports based on the uplink feedback resources, where M and M_{C} are positive integers, and M_{C} ≤ M. In an example, M_{C} CSI reports need to be fed back, but the feedback resources of at least two reports of the M_{C} reports conflict. The conflict of feedback resources of the two reports means that at least one symbol and/or at least one subcarrier in the transmission resources (such as the PUCCH or PUSCH) corresponding to the two reports used for feedback is the same. In an example, the first communication node needs to feed back multiple CSI reports, where the transmission resources corresponding to at least L CSI reports in the multiple CSI reports conflict. In an example, the L conflicting CSI reports include at least one CSI report including the second-type precoding information, where L is a positive integer. Based on this, the priority values (PVs) of the L conflicting CSI reports may be calculated based on the priority calculation formula, and the L conflicting CSI reports are sorted in ascending order based on the priority values. At least one CSI report with a small priority is selected to be transmitted in an uplink transmission resource.

Optionally, in this embodiment, the higher-layer signaling includes but is not limited to the RRC and MAC CE. Physical layer signaling may be transmitted between the first communication node and the second communication node. For example, the physical layer signaling is transmitted on a PDCCH or on a PUCCH.

In this embodiment, indicators of various parameters may also be referred to as indexes or identifiers (IDs). Indexes and identifiers are completely equivalent concepts. For example, the resource index in a wireless system may include but is not limited to the index corresponding to one of the following: a reference signal resource, a reference signal resource group, a reference signal resource configuration, a channel state information report, a CSI report set, a terminal, a base station, a panel, a neural network, a sub-neural network, and a neural network layer. The second communication node may indicate the identifier of one or a group of resources to the first communication node through various higher-layer signaling or physical layer signaling.

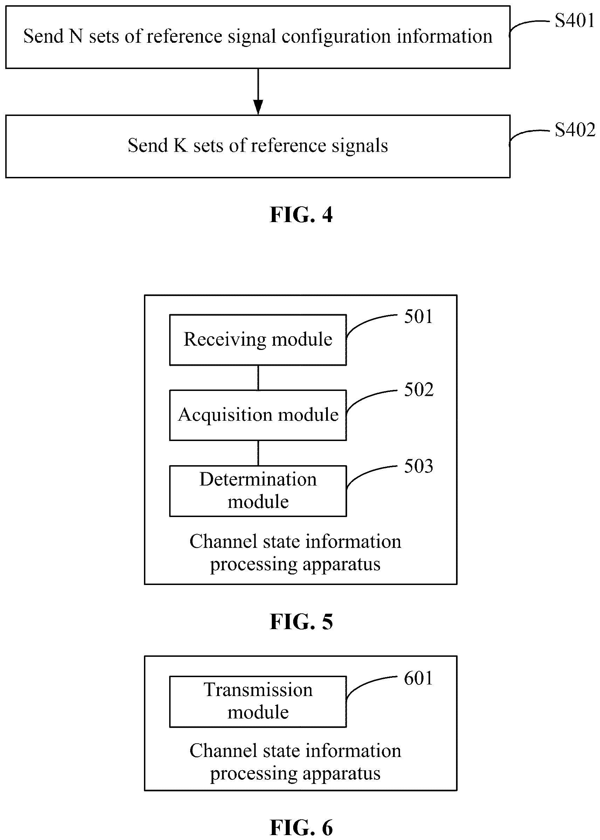

FIG. 4 is another flowchart of the channel state information processing method according to an embodiment of the present application. The method may be applied to a second communication node. As shown in FIG. 4, the method may include S401 and S402.

In S401, N sets of reference signal configuration information are sent.

In S402, K sets of reference signals are sent.

The K sets of reference signals are used by a first communication node to acquire K pieces of channel information and determine M pieces of channel state information based on the K pieces of channel information, where K, N, and M are each a positive integer, K is less than N, and M is greater than or equal to 1.

In an embodiment, a set of reference signals includes one of the following: a reference signal resource, a group of reference signal resources, a reference signal resource set, and a reference signal resource corresponding to a reference signal resource configuration.

In an embodiment, the N sets of reference signal configuration information have the same quasi-co-location parameter.

In an embodiment, the K pieces of channel information are channel information prior to a reference slot, and/or the M pieces of channel state information are channel state information of a reference slot and a slot after the reference slot.

In an embodiment, the K sets of reference signals are sent based on the N sets of reference signal configuration information.

In an embodiment, N sets of reference signal configuration information correspond to N sets of reference signals, and the K sets of reference signals are part of the N sets of reference signals.

In an embodiment, the method may further include receiving the channel state information fed back by the first communication node and/or the slot corresponding to the channel state information.

Some example embodiments are listed below to illustrate the channel state information processing method in the preceding embodiments of the present application. The example embodiments below may be implemented independently or in combination.

In an example embodiment, the second communication node transmits only K sets of reference signals out of N sets of reference signals due to resource conflicts or other reasons, where K is less than N. The first communication node receives K sets of reference signals corresponding to N sets of reference signal configuration information and finds that the number of sets of reference signals received is less than the expected number of sets. In this case, the first communication node may determine, based on its own processing capability, whether itself has the capability to acquire M pieces of channel state information based on K pieces of channel information. If the first communication node does not have this capability, a piece of channel state information may be determined based on at least one piece of channel information among the K pieces of channel information.

The channel state information is the first-type precoding information, and the first-type precoding information may be information obtained by quantizing the channel information in a codebook manner.

After obtaining K pieces of channel information based on the K sets of reference signals, the first communication node may select at least one piece of channel information from the K pieces of channel information and obtain a piece of channel state information corresponding to the at least one piece of channel information in a predetermined manner. The predetermined manner may be the codebook-based manner.

In an embodiment, the preceding predetermined manner may be agreed upon between the first communication node and the second communication node, may be determined by the first communication node based on received signaling information, or may be determined by the first communication node itself, and the first communication node informs the second communication node of the manner determined by the first communication node itself by feeding back the corresponding signaling information.

In an embodiment, in a case where K is less than or equal to a first threshold X, the first communication node determines a piece of channel state information based on at least one piece of channel information among the K pieces of channel information, where the piece of channel state information is first-type precoding information, and X is an integer greater than 1 and less than N.

Exemplarily, assuming that the slots corresponding to the K sets of reference signals received by the first communication node are slot n - 8, slot n - 6, and slot n - 4, the first communication node may determine the channel information of the corresponding slots based on the reference signals in slot n - 6 and slot n - 4, process the obtained two pieces of channel information into one piece of channel information, then quantize the obtained one piece of channel information through a preset codebook to obtain a piece of channel state information, and feed back the channel state information.

In an embodiment, the first communication node may determine a piece of channel state information based on channel information corresponding to a reference signal with the largest transmission slot among the K sets of reference signals. Exemplarily, assuming that the slots corresponding to the K sets of reference signals received by the first communication node are slot n - 8, slot n - 6, and slot n - 4, the first communication node may determine the channel information of the slot based on the reference signal in slot n - 4, then quantize the channel information of slot n - 4 through a preset codebook to obtain a piece of channel state information, and feed back the channel state information. In a case where the second communication node configures transmission resources for transmitting M pieces of channel state information, in this embodiment, the first communication node determines a piece of channel state information based on at least one piece of channel information among the K pieces of channel information. Therefore, the first communication node may select a transmission resource in the M transmission resources to feed back the obtained piece of channel state information, and the remaining (M - 1) transmission resources do not feedback the channel state information, that is, the remaining (M - 1) transmission resources may be used to transmit data or other signaling or signals.

In this embodiment, when the first communication node does not have the capability to acquire M pieces of channel state information based on K pieces of channel information, the first communication node may directly fall back to the traditional codebook manner and select at least one piece of channel information from the K pieces of channel information to determine a piece of channel state information so that the first communication node can effectively acquire the channel state information in the case where the number of received reference signal sets is less than the expected number of reference signal sets. Moreover, a piece of channel state information is determined based on channel information corresponding to a reference signal with the largest transmission slot among the K sets of reference signals, which can better reflect the channel state of the reference slot and slots after the reference slot, thereby improving the accuracy of the channel state information.

In another example embodiment, the second communication node transmits only K sets of reference signals out of N sets of reference signals due to resource conflicts or other reasons, where K is less than N. The first communication node receives K sets of reference signals corresponding to N sets of reference signal configuration information and finds that the number of received sets of reference signals is less than the expected number of sets. In this case, the first communication node may determine, based on its own processing capability, whether itself has the capability to acquire M pieces of channel state information based on K pieces of channel information. If the first communication node has this capability, in one of the embodiments, the first communication node may acquire N pieces of channel information by performing zero padding on the K pieces of channel information and determine M1 pieces of channel state information based on the acquired N pieces of channel information in a first acquisition manner, where M1 is less than or equal to M.

The first communication node may determine which K pieces of channel information among the N pieces of channel information are received by itself based on the slots of the reference signals corresponding to the K pieces of channel information. The first communication node may then pad zero matrices for the channel information corresponding to the reference signals that are not received, thereby processing the K pieces of channel information into N pieces of channel information. The first communication node processes the N pieces of channel information in the first acquisition manner to determine M1 pieces of channel state information. The zero matrix is a matrix of Nr*Nt dimension or a matrix of Nr*Nt*2 dimension, where Nr and Nt denote the number of antennas of the first communication node and the number of antennas of the second communication node, respectively, and 2 is the number of channels. Exemplarily, the first acquisition manner may be the original AI network that requires N pieces of channel information as input to output M pieces of channel state information. Therefore, if the original AI network continues to be used, the K pieces of channel information need to be processed into N pieces of channel information to enable further use of the original AI network. In this embodiment, zero padding may be applied to the K pieces of channel information to obtain N pieces of channel information.

In this embodiment, determining M pieces of channel state information or fewer than M pieces of channel state information based on N pieces of channel information is also related to the capabilities of the first communication node.

In another embodiment, the first communication node may directly determine M2 pieces of channel state information based on the K pieces of channel information in a second acquisition manner, where M2 is less than or equal to M.

The second acquisition manner may be a new AI network, that is, the first communication node may search for a new AI network and directly process the K pieces of channel information into M2 pieces of channel state information through the new AI network.

In the present application, the AI network is only a method for determining M1 pieces of channel state information from N pieces of channel information, and the AI network may be replaced with a processing module or another implementation.

That is, the first communication node may process the K pieces of channel information into the expected N pieces of channel information and then determine M1 pieces of channel state information based on the N pieces of channel information in a first acquisition manner. Alternatively, the first communication node may directly process the K pieces of channel information in the second acquisition manner to obtain M2 pieces of channel state information. The choice of the acquisition manner may be based on the capabilities supported by the first communication node. For example, if the first communication node only supports the first acquisition manner, the first communication node may perform processing in the first acquisition manner; and if the first communication node supports both manners, the first communication node may choose either one for processing.

Optionally, before determining M pieces of channel state information based on K pieces of channel information, the first communication node may also determine whether K is greater than the first threshold X. In the case where K is greater than the first threshold X, the first communication node may acquire N pieces of channel information by performing zero padding on the K pieces of channel information and then determine M1 pieces of channel state information based on the acquired N pieces of channel information. Alternatively, the first communication node may determine M2 pieces of channel state information based on the K pieces of channel information in the second acquisition manner. In the case where K is less than or equal to the first threshold X, one piece of channel state information may be determined based on at least one piece of channel information among the K pieces of channel information. That is, when the number of received sets of reference signals is far less than the expected number of sets, the first communication node may fall back to the traditional codebook manner and select at least one piece of channel information from the K pieces of channel information to determine a piece of channel state information so that the first communication node can acquire more accurate channel state information when the number of received sets of reference signals is fewer than the expected number of sets of reference signals.

In an embodiment, in the case where K is greater than a third threshold Z, the first communication node determines M2 pieces of channel state information based on the K pieces of channel information in the second acquisition manner, that is, the second acquisition manner is just used for predicting the channel state information in a case where a large amount of historical channel information is available, which improves the accuracy of the channel state information.

In another embodiment, in the case where K is less than or equal to a second threshold Y, no channel state information is determined, or the channel state information is determined as an empty set, where Y is an integer greater than 1 and less than N. That is, when the number of received sets of reference signals is far less than the expected number of sets, the first communication node does not perform determining M pieces of channel state information based on the K pieces of channel information.

In an embodiment, the first communication node does not expect to receive fewer than N sets of reference signals.

In this embodiment, the first communication node may perform zero padding on K pieces of channel information to acquire N pieces of channel information and determine M1 pieces of channel state information based on the first acquisition method and the N pieces of channel information. Alternatively, the first communication node may determine the second acquisition method and then determine M2 pieces of channel state information based on the K pieces of channel information in the second acquisition manner. Thus, the first communication node can effectively acquire channel state information when the feedback based on N pieces of channel information to determine M pieces of channel state information fails. Furthermore, by the configuration of appropriate thresholds and selection of different channel state information processing manners, the accuracy of the determined channel state information is enhanced.

FIG. 5 is a diagram illustrating the structure of a channel state information processing apparatus according to an embodiment of the present application. The apparatus is integrated into the first communication node, as shown in FIG. 5, and the apparatus may include a receiving module 501, an acquisition module 502, and a determination module 503.

The receiving module 501 is configured to receive N sets of reference signal configuration information and K sets of reference signals. The acquisition module 502 is configured to acquire K pieces of channel information based on the K sets of reference signals. The determination module 503 is configured to determine M pieces of channel state information based on the K pieces of channel information. K, N, and M are each a positive integer, K is less than N, and M is greater than or equal to 1.

Based on the preceding embodiment, optionally, the receiving module 501 may include a first receiving unit and a second receiving unit. The first receiving unit is configured to receive N sets of reference signal configuration information. The second receiving unit is configured to receive K sets of reference signals.

Based on the preceding embodiments, optionally, a set of reference signals includes one of the following: a reference signal resource, a group of reference signal resources, a reference signal resource set, and a reference signal resource corresponding to a reference signal resource configuration.

Based on the preceding embodiments, optionally, the N sets of reference signal configuration information have the same quasi-co-location parameter.

Based on the preceding embodiments, optionally, the K pieces of channel information are channel information prior to a reference slot, and/or the M pieces of channel state information are channel state information of a reference slot and a slot after the reference slot.

Based on the preceding embodiments, optionally, the receiving module 501 is configured to receive the K sets of reference signals based on the N sets of reference signal configuration information. That is, the second receiving unit is configured to receive the K sets of reference signals based on the N sets of reference signal configuration information.

Based on the preceding embodiments, optionally, the N sets of reference signal configuration information correspond to N sets of reference signals, and the K sets of reference signals are part of the N sets of reference signals.

Based on the preceding embodiments, optionally, the determination module 503 is configured to determine a piece of channel state information based on at least one piece of channel information among the K pieces of channel information, where the piece of channel state information is first-type precoding information.

Based on the preceding embodiments, optionally, the determination module 503 is configured to determine a piece of channel state information based on channel information corresponding to a reference signal with the largest transmission slot among the K sets of reference signals.

Based on the preceding embodiments, optionally, the first communication node does not expect to receive fewer than N sets of reference signals.

Based on the preceding embodiments, optionally, the determination module 503 is configured to, in a case where K is less than or equal to a first threshold X, determine a piece of channel state information based on at least one piece of channel information among the K pieces of channel information, where the piece of channel state information is first-type precoding information, and X is an integer greater than 1 and less than N.

Based on the preceding embodiments, optionally, the determination module 503 is configured to, in a case where K is less than or equal to a second threshold Y, determine, by the first communication node, no channel state information or determine the channel state information as an empty set, where Y is an integer greater than 1 and less than N.

Based on the preceding embodiments, optionally, the determination module 503 is configured to acquire N pieces of channel information based on the K pieces of channel information and determine M1 pieces of channel state information based on the N pieces of channel information in a first acquisition manner, where M1 is less than or equal to M.

Based on the preceding embodiments, optionally, the determination module 503 is configured to acquire N pieces of channel information by performing zero padding on the K pieces of channel information.

Optionally, K is greater than a first threshold X, and X is an integer greater than 1 and less than N.

Based on the preceding embodiments, optionally, the determination module 503 is configured to determine M2 pieces of channel state information based on the K pieces of channel information in a second acquisition manner, where M2 is less than or equal to M.

Optionally, K is greater than a third threshold Z, and Z is an integer greater than 1 and less than N.

Based on the preceding embodiments, alternatively, the channel state information processing apparatus also includes a feedback module.

The feedback module is configured to feed back the channel state information and/or a slot corresponding to the channel state information.

FIG. 6 is a diagram illustrating another structure of a channel state information processing apparatus according to an embodiment of the present application. As shown in FIG. 6, the apparatus may include a transmission module 601.

The transmission module 601 is configured to send N sets of reference signal configuration information. The transmission module 601 is also configured to send K sets of reference signals. The K sets of reference signals are used by a first communication node to acquire K pieces of channel information and determine M pieces of channel state information based on the K pieces of channel information. K, N, and M are each a positive integer, K is less than N, and M is greater than or equal to 1.

Based on the preceding embodiment, optionally, the transmission module 601 may include a first transmission unit and a second transmission unit. The first transmission unit is configured to send the N sets of reference signal configuration information. The second transmission unit is configured to send the K sets of reference signals.

Optionally, a set of reference signals includes one of the following: a reference signal resource, a group of reference signal resources, a reference signal resource set, and a reference signal resource corresponding to a reference signal resource configuration.

Optionally, the N sets of reference signal configuration information have the same quasi-co-location parameter.

Optionally, the K pieces of channel information are channel information prior to a reference slot, and/or the M pieces of channel state information are channel state information of a reference slot and a slot after the reference slot.

Based on the preceding embodiments, optionally, the transmission module 601 is configured to send the K sets of reference signals based on the N sets of reference signal configuration information. That is, the second transmission unit is configured to send the K sets of reference signals based on the N sets of reference signal configuration information.

Optionally, the N sets of reference signal configuration information correspond to N sets of reference signals, and the K sets of reference signals are part of the N sets of reference signals.

Based on the preceding embodiments, alternatively, the channel state information processing apparatus also includes a receiving module.

The receiving module is configured to receive the channel state information and/or a slot corresponding to the channel state information.

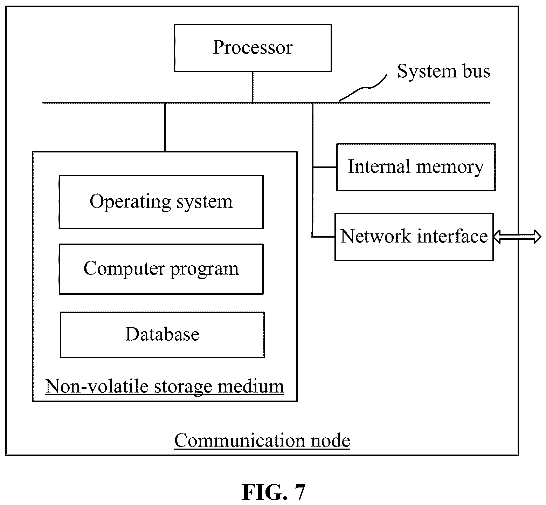

In an embodiment, a communication node is provided, and the internal structure of the communication node may be as shown in FIG. 7. The communication node includes a processor, a memory, a network interface, and a database that are all connected via a system bus. The processor of the communication node is used to provide computing and control capabilities. The memory of the communication node includes non-volatile storage media and internal memory. The non-volatile storage media store an operating system, a computer program, and a database. The internal memory provides an environment for running the operating system and computer program stored in the non-volatile storage media. The database of the communication node is used to store data generated during the process of channel state information processing. The network interface of the communication node is used to communicate with an external terminal via a network connection. When executed by the processor, the computer program implements a channel state information processing method.

It should be understood by those skilled in the art that the structure shown in FIG. 7 is only a block diagram of the partial structure related to the solution of the present application and does not constitute a limitation on the communication node to which the solution of the present application is applied. The communication node may include more or fewer components than those shown in the figure, combine certain components, or have a different component arrangement.

In an embodiment, a first communication node is provided. The first communication node includes a memory and a processor. The memory stores a computer program, and the processor is configured to, when executing the computer program, implement the following:

N sets of reference signal configuration information and K sets of reference signals corresponding to the N sets of reference signal configuration information are received; K pieces of channel information are acquired based on the K sets of reference signals; and M pieces of channel state information are determined based on the K pieces of channel information. K, N, and M are each a positive integer, K is less than N, and M is greater than or equal to 1.

In an embodiment, a second communication node is provided. The second communication node includes a memory and a processor. The memory stores a computer program, and the processor is configured to, when executing the computer program, implement the following:

N sets of reference signal configuration information are sent, and K sets of reference signals are sent. The K sets of reference signals are used by a first communication node to acquire K pieces of channel information and determine M pieces of channel state information based on the K pieces of channel information. K, N, and M are each a positive integer, K is less than N, and M is greater than or equal to 1.

In an embodiment, a storage medium is provided. The storage medium stores a computer program. The computer program, when executed by a processor, implements the following:

N sets of reference signal configuration information and K sets of reference signals corresponding to the N sets of reference signal configuration information are received; K pieces of channel information are acquired based on the K sets of reference signals; and M pieces of channel state information are determined based on the K pieces of channel information. K, N, and M are each a positive integer, K is less than N, and M is greater than or equal to 1.

In an embodiment, a storage medium is provided. The storage medium stores a computer program. The computer program, when executed by a processor, implements the following:

N sets of reference signal configuration information are sent. K sets of reference signals are sent. The K sets of reference signals are used by a first communication node to acquire K pieces of channel information and determine M pieces of channel state information based on the K pieces of channel information. K, N, and M are each a positive integer, K is less than N, and M is greater than or equal to 1.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared or semiconductor system, apparatus or device, or any combination thereof. The computer readable storage medium includes (a non-exhaustive list): an electrical connection having one or more wires, a portable computer disk, a hard disk, a random access memory (RAM), a read-only memory (ROM), an electrically erasable programmable read only memory (EPROM), a flash memory, an optical fiber, a portable compact disk read-only memory (CD-ROM), an optical memory component, a magnetic memory component, or any suitable combination thereof. In the present application, the computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any suitable medium including, but not limited to, a radio medium, a wire, an optical cable, and radio frequency (RF), or any suitable combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network (including a local area network (LAN) or a wide area network (WAN)) or may be connected to an external computer (for example, via the Internet through an Internet service provider).

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for a local technical environment and may be implemented by using any suitable data storage technology, such as, but not limited to, a read-only memory (ROM), a random-access memory (RAM), and an optical memory apparatus and system (a digital video disc (DVD) or a compact disk (CD)). Computer-readable media may include non-transitory storage media. The data processor may be of any type suitable to the local technical environment, such as, but is not limited to, a general purpose computer, a special purpose computer, a microprocessor, a digital signal processing (DSP), an application specific integrated circuit (ASIC), a field-programmable gate array (FPGA), and a processor based on a multi-core processor architecture.

## Claims

1. A channel state information processing method, the method being applied to a first communication node and comprising:
receiving N sets of reference signal configuration information and K sets of reference signals;
acquiring K pieces of channel information based on the K sets of reference signals; and
determining M pieces of channel state information based on the K pieces of channel information;
wherein K, N, and M are each a positive integer, K is less than N, and M is greater than or equal to 1.

2. The channel state information processing method of claim 1, wherein a set of reference signals of the K sets of reference signals comprises one of the following: a reference signal resource, a group of reference signal resources, a reference signal resource set, and a reference signal resource corresponding to a reference signal resource configuration.

3. The channel state information processing method of claim 1, wherein the N sets of reference signal configuration information have a same quasi-co-location parameter.

4. The channel state information processing method of claim 1, wherein at least one of the following is satisfied:
the K pieces of channel information are channel information prior to a reference slot; or
the M pieces of channel state information are channel state information of a reference slot and channel state information of a slot after the reference slot.

5. The channel state information processing method of claim 1, wherein receiving the K sets of reference signals comprises:
receiving the K sets of reference signals based on the N sets of reference signal configuration information.

6. The channel state information processing method of claim 1, wherein the N sets of reference signal configuration information correspond to N sets of reference signals, and the K sets of reference signals are part of the N sets of reference signals.

7. The channel state information processing method of claim 1, wherein determining the M pieces of channel state information based on the K pieces of channel information comprises:
determining a piece of channel state information based on at least one piece of channel information among the K pieces of channel information, wherein the piece of channel state information is first-type precoding information.

8. The channel state information processing method of claim 7, wherein determining the piece of channel state information based on the at least one piece of channel information among the K pieces of channel information comprises:
determining the piece of channel state information based on channel information corresponding to a reference signal with a largest transmission slot among the K sets of reference signals.

9. The channel state information processing method of claim 1, wherein the first communication node does not expect to receive fewer than N sets of reference signals.

10. The channel state information processing method of claim 1, wherein determining the M pieces of channel state information based on the K pieces of channel information comprises:
in a case where K is less than or equal to a first threshold X, determining a piece of channel state information based on at least one piece of channel information among the K pieces of channel information, wherein the piece of channel state information is first-type precoding information, and X is an integer greater than 1 and less than N.

11. The channel state information processing method of claim 1, wherein determining the M pieces of channel state information based on the K pieces of channel information comprises:
in a case where K is less than or equal to a second threshold Y, determining, by the first communication node, no channel state information or the M pieces of channel state information as an empty set, wherein Y is an integer greater than 1 and less than N.

12. The channel state information processing method of claim 1, wherein determining the M pieces of channel state information based on the K pieces of channel information comprises:
acquiring N pieces of channel information based on the K pieces of channel information; and
determining, in a first acquisition manner, M1 pieces of channel state information based on the N pieces of channel information, wherein M1 is less than or equal to M.

13. The channel state information processing method of claim 12, wherein acquiring the N pieces of channel information based on the K pieces of channel information comprises:
performing zero padding on the K pieces of channel information to acquire the N pieces of channel information.

14. The channel state information processing method of claim 12, wherein K is greater than a first threshold X, and X is an integer greater than 1 and less than N.

15. The channel state information processing method of claim 1, wherein determining the M pieces of channel state information based on the K pieces of channel information comprises:
determining, in a second acquisition manner, M2 pieces of channel state information based on the K pieces of channel information, wherein M2 is less than or equal to M.

16. The channel state information processing method of claim 15, wherein K is greater than a third threshold Z, and Z is an integer greater than 1 and less than N.

17. The channel state information processing method of any one of claims 1 to 16, further comprising at least one of the following:
feeding back the M pieces of channel state information; or
feeding back a slot corresponding to the M pieces of channel state information.

18. A channel state information processing method, the method being applied to a second communication node and comprising:
sending N sets of reference signal configuration information; and
sending K sets of reference signals, wherein the K sets of reference signals are used by a first communication node to acquire K pieces of channel information and determine M pieces of channel state information based on the K pieces of channel information, wherein K, N, and M are each a positive integer, K is less than N, and M is greater than or equal to 1.

19. The channel state information processing method of claim 18, wherein a set of reference signals of the K sets of reference signals comprises one of the following: a reference signal resource, a group of reference signal resources, a reference signal resource set, and a reference signal resource corresponding to a reference signal resource configuration.

20. The channel state information processing method of claim 18, wherein the N sets of reference signal configuration information have a same quasi-co-location parameter.

21. The channel state information processing method of claim 18, wherein at least one of the following is satisfied:
the K pieces of channel information are channel information prior to a reference slot; or
the M pieces of channel state information are channel state information of a reference slot and channel state information of a slot after the reference slot.

22. The channel state information processing method of claim 18, wherein sending the K sets of reference signals comprises:
sending the K sets of reference signals based on the N sets of reference signal configuration information.

23. The channel state information processing method of claim 18, wherein the N sets of reference signal configuration information correspond to N sets of reference signals, and the K sets of reference signals are part of the N sets of reference signals.

24. The channel state information processing method of any one of claims 18 to 23, further comprising at least one of the following:
receiving the M pieces of channel state information; or
receiving a slot corresponding to the M pieces of channel state information.

25. A channel state information processing apparatus, the apparatus being integrated into a first communication node and comprising:
a receiving module configured to receive N sets of reference signal configuration information and K sets of reference signals;
an acquisition module configured to acquire K pieces of channel information based on the K sets of reference signals; and
a determination module configured to determine M pieces of channel state information based on the K pieces of channel information;
wherein K, N, and M are each a positive integer, K is less than N, and M is greater than or equal to 1.

26. A channel state information processing apparatus, the apparatus being integrated into a second communication node and comprising:
a transmission module configured to send N sets of reference signal configuration information;
wherein the transmission module is further configured to send K sets of reference signals, wherein the K sets of reference signals are used by a first communication node to acquire K pieces of channel information and determine M pieces of channel state information based on the K pieces of channel information, wherein K, N, and M are each a positive integer, K is less than N, and M is greater than or equal to 1.

27. A communication node, comprising a memory and a processor, wherein the memory stores a computer program, and the processor, when executing the computer program, is configured to implement the channel state information processing method of any one of claims 1 to 24.

28. A storage medium storing a computer program, wherein when the computer program is executed by a processor, the channel state information processing method of any one of claims 1 to 24 is implemented.
